# EUROPEAN PATENT SPECIFICATION

(11) **EP 0 744 024 B1**
(45) Date of publication and mention of the grant of the patent: **09.01.2002**
(21) Application number: 95910922.4
(22) Date of filing: 06.02.1995
(51) Int. Cl.: G01N 27/447

(54) **FLUORESCENCE-BASED ELECTROPHORESIS SYSTEM FOR POLYNUCLEOTIDE ANALYSIS**
ELEKTROFORETISCHE FLUORESZENZVORRICHTUNG FÜR DIE ANALYSE VON POLYNUKLEOTIDEN
SYSTEME D'ELECTROPHORESE PAR FLUORESCENCE POUR ANALYSE DE POLYNUCLEOTIDES

(30) Priority: 07.02.1994 US 193629
(43) Date of publication of application: 27.11.1996
(73) Proprietor: PE Corporation (NY), Foster City California 94404 (US)
(72) Inventor: HING, Paul, A., Redwood City, CA 94062 (US); HOFF, Louis B., Belmont, CA 94002 (US); LACHENMEIER, Eric, W., La Honda, CA 94020 (US); MEAD, Dennis, E., Campbell, CA 95008 (US); SIMKINS, Barry, A., Los Gatos, CA 95030 (US); EFCAVITCH, J. William, San Mateo, CA 94402 (US)
(74) Representative: West, Alan Harry
(86) International application number: US9501487
(87) International publication number: WO9521378

(56) References cited:
- WO-A-89/10550
- WO-A-91/11709
- FR-A- 2 671 407
- US-A- 5 162 654
- ANALYTICAL CHEMISTRY, vol. 64, no. 18, 15 September 1992 WASHINGTON, DC, US, pages 2149-2154, XP 000319973 X. C. HUANG 'DNA sequencing using capillary array electrophoresis'
- APPLIED SPECTROSCOPY, vol. 44, no. 5, June 1990 FREDERICK, MD, US, pages 755-765, XP 000132551 YUNG-FONG CHENG 'charge-coupled device fluorescence detection for capillary-zone electrophoresis'
- NUCLEIC ACID RESEARCH, vol. 19, no. 18, 1991 pages 4955-4962, A. E. KARGER 'MULTIWAVELENGTH FLUORESCENCE DETECTION FOR DNA SEQUENCING USING CAPILLARY ELECTROPHORESIS' cited in the application

## Description

This invention relates to apparatus and methods for performing electrophoresis, and more particularly to fluorescence-based capillary electrophoresis systems for polynucleotide analysis.

Polynucleotide fragment analysis methods are used to characterize mixtures of polynucleotide fragments based on their migration velocity through a polymer network under the influence of an electric field, i.e. their electrophoretic mobility, in combination with single or multi-color fluorescence detection. Typically these methods are applied subsequent to amplification of the polynucleotide using a method such as PCR, e.g. Mullis, U.S. patent 4,683,202. Examples of such methods include polynucleotide sequencing, e.g. Trainor, Anal.Chem., 62: 418-426 (1990), restriction fragment length polymorphisim (RFLP) analysis, e.g. Watkins, Biotechniques, 6: 310-319 (1988), and variable number of tandem repeat (VNTR) or microsatellite analysis, e.g. Ziegle et al., Genomics, 14: 1026-1031. Each of these methods can provide valuable genetic information about the sample donor.

Current polynucleotide fragment analysis systems are characterized by a number of disadvantageous characteristics: (i) current systems are limited to the use of low electrical fields, resulting in long analysis times; (ii) manually prepared electrophoresis gels must be used, and these gels can be used for only a single analysis; (iii) current systems require the electrophoresis gels to be manually loaded with sample. These shortcomings are limiting the application of these systems in high-throughput applications such as genome sequencing projects or large-scale screening of clinical samples.

One approach to the development of high performance electrophoresis systems has been to replace the slab gel with capillary electrophoresis (CE) based systems, e.g. Grossman et al., editors, Capillary Electrophoresis: Theory and Practice (Academic Press, San Diego, 1992); Drossman et al., Anal. Chem., 62: 900-903 (1990); Swerdlow et al., Polynucleotides Research, 18: 1415-1419(1990). Capillary electrophoresis provides a number of significant potential advantages over slab systems: (i) capillaries have high surface-to-volume ratios which permit more efficient dissipation of the Joule heat produced by the electrophoresis which, in turn, permits (a) the use of high electrical fields, resulting in faster analyses and superior resolution, and (b) the use of non-rigid, flowable sieving networks, making possible the use of automatically replenishable sieving networks, e.g. Sudor et al., Electrophoresis 12: 1056-1058 (1991).; (ii) CE is amenable to the automation of the sample-loading step. Further increase in performance can be realized by running multiple capillaries in parallel; an approach analogous to running multiple lanes on a slab gel, e.g. Huang et al., Anal. Chem., 64: 967-972 (1992).

The most desirable form of detection for polynucleotide fragment analysis would be simultaneous multi-color fluorescence detection. However, current approaches, i.e. a filter wheel -photomultiplier tube (PMT) detector, are not ideal because the filter wheel must be indexed rapidly enough to observe each color before the analyte band moves out of the detector region. This is problematic due to the high electrophoretic velocity of the fragments in CE. Therefore, a detection scheme which acquires all colors simultaneously would be clearly superior.

In light of the above, a significant advance in the art could be achieved by the availability of a capillary-based electrophoresis instrument having an improved multi-color fluorescence detector. In order to accommodate the high electrophoretic velocities of CE, the performance of such an instrument would require the ability to detect all colors simultaneously, rather than sequentially. Also, it must be sufficiently sensitive to detect and resolve single base differences between fragments larger than 350 bases. It would also possess the ability to automatically load samples and replenish the capillaries with fresh separation medium between electrophoresis runs.

WO 89/10550 is concerned with one approach to these problems and describes an automated capillary electrophoresis system which allows simultaneous detection of absorbance and fluorescence of the same sample. The detector contains a pulsed light source for fluorescence measurements and a replenishment system which relies upon reduced pressure to draw fresh material into the capillary towards the detector.

In accordance with the present invention, there is provided a fluorescent polynucleotide analyzer system utilizing capillary electrophoresis which provides still further advantages.

The present invention therefore provides an apparatus for the electrophoretic analysis of fluorescently labeled polynucleotide fragments, which comprises:
(a) a capillary containing an electrophoretic separation medium, the capillary having an inlet-end and an outlet-end;
(b) means for introducing the fluorescently labeled polynucleotide fragments into the capillary;
(c) an electrical power supply capable of generating a sufficient voltage across the capillary to cause electrophoresis of the fluorescently labeled polynucleotide fragments;
(d) spectral-array detection means for detecting said fluorescently labeled polynucleotide fragments including the simultaneous detection of multiple fluorescent labels; and
(e) means for introducing and removing electrophoretic separation medium from said capillary, characterized in that the detection means (d) includes a laser light source and that the introducing and removing means is effective to apply a positive pressure to a reservoir containing separation medium which is in fluid communication with the outlet-end of the capillary.

The present invention provides also a method for the electrophoretic analysis of fluorescently labeled polynucleotide fragments, which comprises:
(a) introducing the fluorescently labeled polynucleotide fragments into a capillary containing an electrophoretic separation medium, the capillary having an inlet-end and an outlet-end;
(b) applying a sufficient voltage across the capillary to cause electrophoresis of the fluorescently labeled polynucleotide fragments;
(c) detecting said fluorescently labeled polynucleotide fragments including the simultaneous detection of multiple fluorescent labels, and
(d) introducing fresh electrophoretic separation medium and removing spent electrophoretic separation medium from said capillary, characterized by detecting step (c) being carried out by means of laser-induced fluorescence and by introducing and removing step (d) being carried out by applying a positive pressure to a reservoir containing separation medium which is in fluid-communication with the outlet-end of the capillary.

The invention is described below in greater detail by way of example only with reference to the accompanying drawings, in which:
Figure 1 is a diagram of a particular embodiment of the capillary-based electrophoresis analyzer system of the invention; and
Figure 2 is a diagram depicting the light path through the detector portion of the exemplary analyzer system shown generally in Figure 1.

The term "capillary" as used herein refers to a tube or a channel or other structure capable of supporting a volume of separation medium for carrying out electrophoresis. The geometry of a capillary may vary widely and includes tubes with circular, rectangular, or square cross-sections, channels, grooves, plates, or the like and may be fabricated by a wide range of technologies. An important feature of a capillary for use with the invention is the surface-to-volume ratio of the surface in contact with the electrophoretic separation medium. High values of this ratio permit better heat transfer from the separation medium to the surroundings during electrophoresis. Preferably, values in the range of about 0.2 µm⁻¹ to 0.02 µm⁻¹ are employed. These correspond to the surface-to-volume ratios of tubular capillaries with circular cross-sections having inside diameters in the range of about 10 µm to about 100 µm. Preferably, capillaries for use with the invention are made of silica, fused silica, quartz, silicate-based glass, such as borosilicate glass, phosphate glass, alumina-containing glass, or the like, or other silica-like materials.

The term "polynucleotide" as used herein refers to linear polymers of natural or modifed nucleoside monomers, including double and single stranded deoxyribonucleosides, ribonucleosides, α-anomeric forms thereof, or the like. Usually the nucleoside monomers are linked by phosphodiester bonds or analogs thereof to form polynucleotides ranging in size from a few monomeric units, e.g. 8-40, to several thousands of monomeric units. Whenever a polynucleotide is represented by a sequence of letters, such as "ATGCCTG," it will be understood that the nucleotides are in 5'-3' order from left to right and that "A" denotes deoxyadenosine, "C" denotes deoxycytidine, "G" denotes deoxyguanosine, and "T" denotes thymidine, unless otherwise noted. Analogs of phosphodiester linkages include phosphorothioate, phosphorodithioate, phosphoroselenoate, phosphorodiselenoate, phosphoroanilothioate, phosphoranilidate, phosphoramidate, or the like.

As used herein, "nucleoside" includes the natural nucleosides, including 2'-deoxy and 2'-hydroxyl forms, e.g. as described in Kornberg and Baker, DNA Replication, 2nd Ed. (Freeman, San Francisco, 1992). "Analogs" in reference to nucleosides includes synthetic nucleosides having modified base moieties and/or modified sugar moieties, e.g. described generally by Scheit, Nucleotide Analogs (John Wiley, New York, 1980).

The term "polymer" is a large molecule composed of smaller monomeric subunits covalently linked together in a characteristic fashion. A "homopolymer" is a polymer made up of only one kind of monomeric subunit. A "copolymer" refers to a polymer made up of two or more kinds of monomeric subunits. As used herein the term "polymer" includes homopolymers and copolymers. A "monodisperse" polymer solution means that the polymer molecules in solution have substantially identical molecular weights. A "polydisperse" polymer solution means that the polymer molecules in solution have a distribution of molecular weights.

As used herein, the term "electrophoretic separation medium" refers to a material through which the polynucleotides are electrophoresed and which imparts a size-dependent electrophoretic velocity to the polynucleotides. Typically, such material is a porous network formed by linear or branched polymer molecules, or the like.

As used herein, the term "linear polyacrylamide" or "linear polyacrylamide polymer" refers to a polymer formed from acrylamide monomers in the absence of a crosslinking agent, where "acrylamide monomer" refer to a structure having the form NH₂C(=O)CR₁=CR₂R₃, where R₁ is hydrogen, and R₂ and R₃ can be hydrogen or a methyl group.

As used in this application, the term average molecular weight refers to the number-average molecular weight (Mₙ) of a sample population made up of polymer species having a multiplicity of molecular weights. This quantity is defined by the equation, Mₙ + (Σnᵢ*MWᵢ)/Σ nᵢ, where nᵢ indicates the number of molecules of species i, and MWᵢ is the molecular weight of species i.

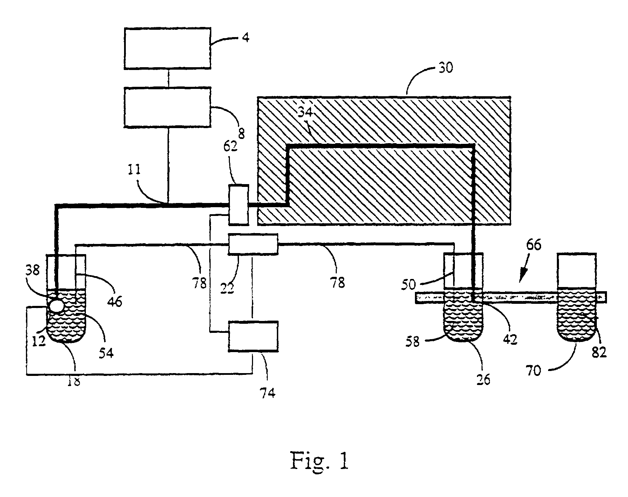

Figure 1 is a schematic drawing of the analyzer of the present invention. The polynucleotide fragments are separated electrophoretically in fused silica capillary tube (34), e.g. having an internal bore diameter (i.d.) of 50 µm, and an outside diameter of 363 µm, or the like. Typically, the outside of the capillary is coated with a polymer coating to ensure adequate durability.

The temperature of the capillary during electrophoresis is an important parameter affecting both the degree of sample denaturation and the electrophoretic velocity of the fragments. Additionally, elevated temperature may be used to reduce the viscosity of the separation medium while it is being introduced into the capillary, thereby reducing the filling time. In the analyzer of the present invention, temperature control means (30) is used to maintain the temperature of the capillary at a selected temperature. Because the degree of resolution and run time are in part determined by the length of the capillary, the temperature control means should accommodate capillaries ranging in length from 30 to 55 cm. Preferably, the temperature of the capillary is controlled by contacting it with thermally regulated surface using an insulated pressure plate.

Sample is introduced into capillary (34), which is filled with an electrophoretic separation medium, by either a hydrodynamic or an electrokinetic injection means, or the like. Typically, in hydrodynamic injection, sample is introduced into the capillary by applying a pressure difference across the capillary using a pumping means while an inlet-end of the capillary, i.e. a high-pressure end, is immersed in the sample. Such pumping means could include a positive displacement syringe pump, a centrifugal pump, a vacuum pump, or any other like pumping means. Typically, in electrokinetic injection, sample is introduced into the capillary by applying a voltage across the capillary using an electrical power supply and associated circuitry while a first electrode and the inlet-end of the capillary are immersed in the sample solution. Preferably, in the analyzer of the present invention, electrokinetic injection is used. In the present invention, electrokinetic injection is accomplished by first immersing inlet-end (42) of the capillary (34) and cathode (50) into sample (58) which is contained in sample reservoir (26) located in autosampler (66), while outlet-end (38) of capillary (34) and anode (46) are immersed in electrophoresis running buffer (54) which is contained in electrode reservoir (18). Next, an injection voltage is established across the capillary for a selected injection time, e.g. 30 s, by means of electrical power supply (22) connected to anode (46) and cathode (50). The injection time and the injection voltage are controlled by electronic computer (74). The electrical power supply used to effect the electrokinetic injection and the subsequent electrophoresis is of conventional design. Preferably, the power supply is capable of generating a DC voltage of at least 10,000 volts. The electrodes should be made from chemically inert and electrically conductive material, e.g. platinum, or the like.

Following sample injection the electrophoretic separation is performed. The electrophoretic separation is accomplished by establishing an electrophoresis voltage across the capillary which is filled with electrophoretic separation medium by means of the electrical power supply and associated circuitry for a run time sufficient to allow the polynucleotides to traverse the capillary. Preferably, autosampler (66) changes the position of inlet-end (42) of capillary (34) and cathode (50) from tube (26) containing sample (58) to tube (70) containing electophoresis running buffer (82). A voltage is applied across capillary (34) by electrical power supply (22) connected to anode (46) and cathode (50), thereby causing the sample components to electrophoretically migrate through the capillary in a size-dependent manner. To avoid anomalous fragment migration due to siphoning of the electrophoretic separation medium, it is important to ensure that, during the separation, the liquid levels of the buffers in tube (70) and tube (18) are the same.

After the polynucleotide fragments have been separated, they are detected by detection means (62). An important feature of the polynucleotide analyzer of the present invention is the "spectral-array fluorescence detector". As used herein, the term "spectral- array fluorescence detector" refers to a detector which employs (i) a means to spectrally separate the emission light, such as a diffraction grating, or a prism, or the like, (ii) an array of detector elements sensitive to light radiation, such as a diode array, a charged coupled device (CCD) system, an array of photomultiplier tubes, or the like; (iii) an excitation light source, such as an incandescent bulb, an arc lamp, a laser, a laser diode, or the like, and (iv) associated optics capable of directing and conditioning both the excitation light and the emission light. The output of a spectral-array detector is light intensity as a function of array location, wherein the array location can be directly related to the wavelength of the light. One example of such a detector is given by Karger et al., Nucleic Acids Research 19: 4955-4962 (1991).

One preferred method of treating the output of a spectral-array detector is to create a "virtual filter". As used herein, the term "virtual filter" refers to a method of manipulating data from a spectral-array detector such that a plurality of discrete wavelength ranges are sampled, wherein the location and bandwidth of each wavelength range can be dynamically changed using software. The virtual filter can mimic a physical interference or absorbence filter, however it has several important advantages. First, virtual-filters can be programmed to interrogate multiple emission wavelengths simultaneously, without the need to split the emitted light into multiple beams, thereby reducing the beam intensity incident on each detector, thereby making it possible to better match the detector to the spectral properties of the excitation light source and the particular fluorescent dyes being used. In addition, simultaneous detection allows for the efficient multi-color detection of fast-moving analytes without the need to rapidly index a multiplicity of filters. Second, virtual filters can be programmed to detect a range of emission bandwidths. This is important because for any application, there exists an optimum combination of sensitivity and color discrimination: as the detection band width is made wider, the detector collects more light, thereby increasing sensitivity, however, at the same time, the broader bandwidth decreases the ability to discriminate between closely related colors. Third, virtual filters have essentially perfect transmission curves, i.e. the filter can discriminate between very closely related colors. Forth, the selected wavelength ranges of the virtual filter can be easily adjusted using software to match the characteristics of various excitation light sources and dye sets. Therefore, changing dye chemistries is a simple matter of changing the virtual filter with software, whereas a mechanical alteration of the system is required when physical filters are used. Moreover, the selected wavelength ranges and band widths of the virtual filter can be changed dynamically, i.e. during the course of a run, to compensate for any spectral changes in the dye labels which occur during a run.

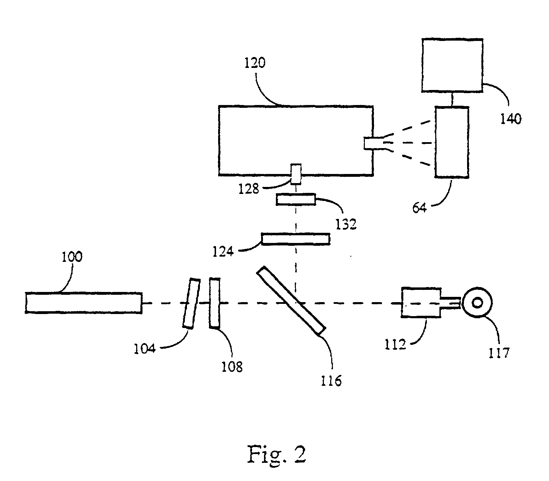

Figure 2 is a schematic diagram of the light path in the spectral-array detection system of the present invention. The present invention utilizes a confocal optical arrangement in order to minimize the amount of scattered excitation light reaching the detector. Preferably, the analyzer system of the invention uses a laser as a fluorescence-excitation light source, such as an argon ion laser that emits a 10 mW, 0.67 mm diameter, polarized light beam having intensity maxima at wavelengths of 488 and 514 nm. Light from laser (100) passes through filter (104) to remove the laser tube's cathode glow. Filter (104) is slightly tilted, e.g. 1-2 degrees, so that reflections from the surface of the filter are thrown off axis and do not pass back into the laser tube. Next, concave lens (108) diverges the light beam to compensate for the over focusing of microscope objective (112). (If the laser is focused down beyond the i.d. of the capillary excessive fluorophore bleaching may occur, thereby decreasing the ultimate fluorescence signal.) The laser light then passes through dichroic mirror (116), which allows virtually all of the polarized laser light to pass, then passes through microscope objective (112) and into the detection region of capillary (117).

The laser light incident on the bore of capillary (117) excites fluorescent labels located in the detection region, whereupon light is emitted and a microscope objective lens collects the emission light. The randomly polarized emission light is then reflected off of dichroic mirror (116) and directed toward spectrograph (120). To reduce the amount of scattered laser light passing onto spectrograph (120), the emission light passes through long-pass filter (124), and is then focused onto entrance slit (128) of spectrograph (120) by re-imaging lens (132). Preferably, spectrograph (120) utilizes a 405 g/mm, 450 nm blaze grating with a dispersion of 17 nm/mm. After passing through the spectrograph, the light then falls onto the CCD (64). The output signal from CCD (64) is transmitted to electronic computer (140) for subsequent data analysis and presentation.

To prepare the analyzer to process subsequent samples, the capillary must be refilled with fresh electrophoretic separation medium. The capillary can be refilled with fresh electrophoretic separation medium by applying a pressure difference across the capillary using a pumping means while fresh electrophoretic separation medium is introduced into the high-pressure end of the capillary. In one preferred embodiment, positive pressure from pump (4) is applied to reservoir (8) which contains fresh electrophoretic separation medium, thereby forcing fresh electrophoretic separation medium out of reservoir (8) into tee (11), which directs the medium into capillary (34). Because valve (12) is closed during this step, the electrophoretic separation medium flows primarily in the direction of inlet-end (42). Preferably, pump (4) could include a positive displacement syringe pump, a centrifugal pump, a vacuum pump, or any other like pumping means. More preferably, pump (4) is a gas-tight syringe pump capable of both positive and negative pressure operation. Preferably, valve (12) is located below the liquid level in reservoir (18) so as to facilitate the removal of trapped gas bubbles from the system. Once the capillary is filled between tee (11) and inlet-end (42), valve (12) is opened, thereby allowing fresh electrophoretic separation medium to flow from reservoir (8) into buffer reservoir (18), thereby completely filling capillary (34) between inlet-end (42) and outlet-end (38). Because the capillary length between tee (11) and outlet-end (38) is shorter than that between tee (11) and inlet-end (42), when valve (12) is open and pressure is applied to reservoir (8). material will flow primarily in the direction of outlet-end (38). After capillary (34) has been filled between inlet-end (42) and outlet-end (38), valve (12) is opened so as to connect inlet-end (42) and outlet-end (38), thereby creating an unobstructed current path between electrodes (46) and (50).

In an alternative capillary-filling protocol, capillary-inlet-end (42) is immersed in tube (70) and outlet-end (38) is immersed in buffer reservoir (18), both of which contain fresh electrophoretic separation medium, while pump (4) creates a vacuum which is transmitted to capillary (34) through reservoir (8) and tee (11). To fill capillary (34) between inlet-end (42) and tee (11), valve (12) is kept in the closed position. Once the capillary is filled between tee (11) and inlet-end (42), valve (12) is opened so as to direct the flow of medium from buffer reservoir (18) to tee (11) and into reservoir (8), thereby completely filling capillary (34) between inlet-end (42) and outlet-end (38) with fresh electrophoretic separation medium. After capillary (34) has been filled between inlet-end (42) and outlet-end (38), valve (12) is opened so as to connect inlet-end (42) and outlet-end (38), thereby creating an unobstructed current path between electrodes (46) and (50).

Another important aspect of the analyzer of the present invention concerns the separation medium used to effect the size-dependent separation of the polynucleotide fragments. Since the charge-to-frictional drag ratio is the same for different sized polynucleotides in free solution, electrophoretic separation requires the presence of a separation medium capable of sieving polynucleotides in a size-dependent manner. Preferably, in order to facilitate system automation, such sieving is achieved by employing flowable polymer solutions as the separation medium. Especially preferred polymer solutions include branched copolymers, such as described by Menchen et al. in International Application No. PCT/US93/09115, and linear homopolymers characterized by (i) water solubility over the temperature range between about 20°C to about 50°C, (ii) a concentration in a separation medium in the range between about 0.001% to about 20% (weight/volume), and (iii) a molecular weight in the range of about 5 x 10³ to about 1 x 10⁶ Daltons (Da). Furthermore, the viscosity of the polymer solutions should be such that they can be readily pumped into and out of a capillary, for example less than 30,000 cp.

Especially preferred linear homopolymers include linear polyacrylamides having an average molecular weight between about 20 kDa and about 100 kDa. The polymer solution contains the linear polyacrylamide at a concentration of between about 2 and about 20 weight % along with a denaturant, e g. urea, and a selected buffer for controlling the pH and the electrical conductivity of the solution. Using this separation medium, a coated capillary must be used as described in Example 2.

In another embodiment of the invention, polymers are selected from the group consisting of N,N-disubstituted polyacrylamides and N-substituted polyacrylamides More preferably, such polymers of the invention are poly(N,N-dimethylacrylamide). The polymer solution contains the poly(N,N-dimethylacrylamide) at a concentration of between about 2 and about 20 weight % along with a denaturant, e.g. urea, and a selected buffer for controlling the pH and the electrical conductivity of the solution. Using this separation medium, an uncoated capillary may be used.

Another embodiment of the invention includes an electrophoresis separation medium comprising a matrix of aggregated copolymers in an aqueous medium. The copolymers are composed of hydrophilic polymer segments having selected, substantially uniform segment lengths, and a plurality of hydrophobic polymer segments carried on and spaced from one another by the hydrophilic polymer segments. When the copolymer is dispersed in an aqueous medium, they form macromolecular aggregates, primarily due to associations between the hydrophobic portions of individual copolymer molecules. In one embodiment of the invention, the hydrophillic polymer segments are selected from the group consisting of a polyether, polyester, polysaccharide, polyurethane, polyamide, polysulfonamide, and polysulfoxide, and the hydrophobic polymer segments are selected from the group consisting of fluorinated hydrocarbon chains. Preferably, the hydrophillic polymer segments are selected from the group consisting of polyethylene glycols (PEG) and the hydrophobic polymer segments are selected from the group consisting of fluorinated hydrocarbon chains. Such copolymers are synthesized by conventional means, e.g. Menchen et al. (cited above); Odian, Principles of Polymerization, Third Edition (John Wiley, New York, 1991); or the like.

Typically, a buffer system for controlling pH and electrical conductivity is employed as the charge-carrying component of the separation medium. Exemplary buffers include aqueous solutions of organic acids, such as citric, acetic, or formic acid; zwitterionics, such as TES (N-tris[hydroxymethyl]-2-aminoethanesulfonic acid, BICINE (N,N-bis[2-hydroxyethyl]glycine, ACES (2-[2-amino-2-oxoethyl)-amino]ethanesulfonic acid), or glycylglycine; inorganic acids, such as phosphoric; and organic bases, such as Tris (Tris[hydroxymethyl]aminomethane) buffers, e.g. available from Sigma. Buffer concentration can vary widely, for example between about 1 mM to 1 M, but are typically about 20 mM. Exemplary buffer solutions for conventional electrophoresis applications include the following: (i) 0.1 M Tris, 0.25 M boric acid, 7 M urea with a pH of 7.6 for single stranded polynucleotide separations; or (ii) 0.089 M Tris, 0.089 M boric acid, 0.005 M EDTA for double stranded polynucleotide separations.

### EXAMPLE 1

### Synthesis of Poly(N,N-dimethylacrylamide) in dioxane using azobisisobutyronitrile

Poly(N,N-dimethylacrylamide) (pDMA) is synthesized using conventional techniques, e.g. as disclosed in Trossarelli et al, J. Polymer Sci, 57:445-452 (1962). Known amounts of dimethylacrylamide (DMA), dioxane, and azobisisobutyronitrile (AIBN) were mixed in an Erlenmeyer flask and argon gas was bubbled through the solution for 10 minutes at room temperature. Polymerization was initiated by raising the temperature to 55°C. Polymerization times ranged from 10 to 25 minutes depending on the concentration of monomer. After polymerization, the resulting polymer was purified by three cycles of precipitation in hexane and dissolution in CH₂Cl₂. Finally, the hexane precipitate was dried overnight in a vacuum desiccator then lyophilized. The table below summarizes the reaction conditions for the various experiments.

| Batch No. | Monomer Concentration (% w/v) | Dioxane (cc) | AIBN (mg) | Estimated Average Molecular Weight* |
|---|---|---|---|---|
| RM1 | 70 | 14.3 | 12 | 79 kd |
| RM2 | 60 | 17.0 | 14 | 92 kd |
| RM3 | 50 | 20.0 | 16 | 99 kd |
| RM4 | 40 | 25.0 | 21 | 97 kd |
| RM5 | 30 | 33.3 | 27 | 83 kd |
| RM6 | 20 | 50.0 | 41 | -- |
| RM7 | 10 | 100.0 | 82 | 69 kd |
| RM8 | 5 | 200.0 | 164 | 54 kd |

| | | | | |
|---|---|---|---|---|
| * Estimated by gel permeation chromatography (peak mol. wt.). | | | | |

### EXAMPLE 2

### Synthesis of Poly(N,N-dimethylacrylamide) in t-butyl alcohol using azobisisobutyronitrile

Further polymerizations were carried out with t-butyl alcohol (t-BuOH) using the following protocol: Known amounts of DMA monomer, t-butyl alcohol, and AIBN were combined, and argon gas was bubbled through the solutions for 20 minutes. The mixtures were brought to 55°C and allowed to polymerize for 15 minutes. The resulting polymers were isolated as described in Example 1. The table below summarizes the reaction conditions for the various experiments.

| Batch No. | Monomer Concentration (% w/v) | t-BuOH (cc) | AIBN (mg) | Monomer (g) | Estimated Average Molecular Weight* |
|---|---|---|---|---|---|
| RM17 | 50 | 20.0 | 16 | 10 | 81 kd |
| RM18 | 50 | 60.0 | 50 | 30 | 107 kd |
| RM19 | 70 | 14.0 | 12 | 10 | 99 kd |
| RM21 | 70 | 72.0 | 60 | 50 | 112 kd |

| | | | | | |
|---|---|---|---|---|---|
| * Estimated by gel permeation chromatography (peak mol. wt.). | | | | | |

### EXAMPLE 3

### Preparation of Linear Polyacrylamide and Coated Capillary

For the following procedure, stock solutions of TMED (N,N,N',N'-tetramethylethylenediamine, 10% v:v in water) and APS (ammonium persulfate, 10% w:v in water) were prepared.

To a 500 ml Erlenmeyer flask maintained at 35°C in a water bath was added 222 ml water and 6.55 ml isopropanol. The solution was stirred for about 10 minutes, with helium being bubbled into the solution. Acrylamide (25 g) was then added (∼1.5 M final concentration). When the acrylamide had fully dissolved, 1.25 ml each of the TMED and APS stocks above were added, and polymerization was allowed to continue for 90 min with vigorous stirring, yielding a solution having a honey-like consistency.

The polymer solution was dialyzed against 5 changes of water (3.5 liters each) over three days at 4°C using a 12-14 kDa cutoff dialysis membrane (Spectra/por #2, Spectrum Medical Industries, Los Angeles, CA). Following dialysis, the polymer solution was lyophilized, yielding 9.58 g dried polymer.

Fused-silica capillary tubing (TSP 050375, Part # 2000017) having the following dimensions was from Polymicro Technologies, Tucson, AZ: length = 20 m, i.d. = 50 µm, o.d. = 361 µm, outer polyimide layer thickness = 16 µm. From this tubing, a 5 meter segment was removed, and a series of 8 evenly spaced 2 mm windows were formed in the tubing by burning off the polyimide coating with a hot wire. The windows were spaced about 55 cm apart so that 8 or 9 capillary tubes, each containing a window 40 cm from the inlet and 15 cm from the outlet, could be prepared from the 5 meter segment.

Prior to the coating procedure below, the tubing was flushed manually by syringe with a 1.0 M solution of NaOH, followed by automated flushing with water using a syringe pump (Model 351, Orion Research, Cambridge, MA).

The inner wall of the capillary tube was chemically coated in three steps using a modification of the procedure of Cobb et al., Anal.Chem., 62: 2478 (1990).

In the first step, the silica surface of the inner wall was activated using thionyl chloride (SOCl₂). Prior to chlorination, the tube was flushed over a 4 hour period with dry, distilled tetrahydrofuran (THF) using the above syringe pump, to dry the inner wall surface. A 2 ml gas-tight syringe was used, with the flow rate set to "0.4", and size set to "5". The total volume of THF passed through the tube was about 800 µl (about ∼80 column volumes). Residual THF was then expelled manually from the tube using a helium stream, and a mixture of dimethylformamide (DMF, 10 µl) in SOCl₂ (2 ml) was passed through the tube by syringe pump, as for THF above (∼4 hours, ∼800 µl). The ends of the tube were then joined with a tight plastic sleeve, and the tube was incubated in an oven overnight at 55°C.

In the second step, the chloride-activated inner wall of the tube was reacted with vinyl magnesium bromide ("Grignard reagent"). The chloride-activated tube was first flushed by syringe pump with dry, distilled THF (1 hour, ∼300 µl) to remove the SOCl₂ solution, and then flushed with a 1 M solution of the Grignard reagent in THF (syringe pump, 2 ml syringe, ∼1 ml over 5 hours). The tube was heated intermittently with a heat gun to facilitate the reaction. After the 5 hour wash period, the ends of the tube were joined again by a tight plastic sleeve, and the capillary tube, still containing the Grignard solution, was incubated overnight at 70°C.

In the third step, the vinyl-coated inner wall was reacted with acrylamide to impart an acrylamide coating. The capillary was first flushed by syringe pump with THF to remove the Grignard solution (1 ml syringe, ∼200 µl over 20 min), with methanol (∼150 µl), and then with water (∼200 µl). The tube was then flushed over 30 min with a freshly prepared polymerization solution (1 ml) containing 300 µl of 10% w:v acrylamide in water, 700 µl of water, 1 µl of TMED, and 10 µl of a 10% (w:v) aqueous solution of APS. The tube was then flushed with water (100 µl), dried by helium stream for 1.5 hours, and stored in a -20°C freezer until use

### EXAMPLE 4

### Synthesis and Preparation of Hydrophillic-Hydrophobic Copolymer Matrix

PEG-35,000-(C₆F₁₃)₂ copolymer Tridecafluoro-1-octanol (C₆F₁₃CH₂CH₂OH, 6.2 g, #17112-4, PCR Incorporated, Gainesville, Florida) was placed in a preweighed 200 mL round bottom flask equipped with a teflon stirbar. The preweighed flask was placed in a dry-ice acetone bath and used as a receiver for a vacuum distillation setup. A total of about 10 mL of isophorone diisocyanate was distilled onto the alcohol at 0.01 mm/85-90°C. The resultant solution was purged with argon, sealed with a stopcock/vacuum-takeoff, and stirred overnight in an 80-90°C oil bath. The stopcock was then replaced with a short path distillation setup (connecting adapter, vacuum adapter, and receiver), the system was placed under high vacuum (0.01 mm) and the oil bath temperature was raised to 100°C, during which most of the excess diisocyanate was collected. The oily residue was refluxed with 60 mL of dry (over CaH₂) hexane until dissolution was complete, after which the flask was sealed with a rubber septum and cooled to -15°C for 1-2 hours. The supernatant was then decanted quickly (to avoid water condensation in the cold flask) from the oily residue, and the extraction procedure (reflux in 60 mL hexane followed by decanting of cold supernatant) was repeated two more times. The resultant sticky residue was evacuated for several hours, yielding 2.24 g of activated alcohol as a clear liquid.

Onto the activated alcohol from above was distilled 100 mL of dry ethylene glycol dimethyl ether (directly from LiAlH₄) under argon. The resultant solution was poured into a flask containing 20.0 g of 35,000 MW PEG (Fluka Chemical Co., Ronkonkoma, NY) that had been dried for 4 hours at 0.01 mm, in a 100°C oil bath. The resultant mixture was homogenized under argon with heat, followed by addition of 50 µL of a solution of 0.5 g of dibutyltin dilaurate in 2 mL of dry (over CaH₂) hexane. The mixture was refluxed for 2 hours under argon, and then allowed to cool. After the supernatant had been decanted, the white rubbery product was triturated three times with 200 mL portions of refluxing methyl t-butyl ether, and two times with 200 mL portions of refluxing hexane. The product was evacuated overnight, yielding 18.2 g of a tough white solid.

PEG-35,000-(C₈F₁₇)₂ copolymer. Heptadecafluoro-1-decanol (C₈F₁₇CH₂CH₂OH, 11.05 g, # 17113-2, PCR Inc.) and isophorone diisocyanate (approximately 30 mL) were reacted using the procedure described above, yielding 12.6 g of activated alcohol as a thick oil. The activated alcohol was then dissolved in 99.0 g of dry (over CaH₂) toluene, yielding a stock solution of 0.113 g of activated alcohol per g of toluene solution.

35,000 MW PEG (30 g) was dried for 4 hours at 0.01 mm in a 100°C oil bath To the dried PEG were added 15 g of activated alcohol stock solution and 50 mL of dry (over CaH₂) toluene. The resultant mixture was homogenized under argon with heat, followed by addition of 50 µL of a solution of 0.5 g of dibutyltin dilaurate in 2 mL of dry (over CaH₂) hexane. The mixture was refluxed for 3 hours under argon, followed by workup as described in Example 16, to give approximately 30 g of a white rubbery solid.

An electrophoresis gel containing a 1:1 (w/w) mixture of the PEG-35,000-(C₆F₁₃)₂) copolymer from above and the PEG-35,000-(C₈F₁₇)₂) copolymer from above, 6% (w/v) total concentration (3.0% for each copolymer).

## Claims

1. An apparatus for the electrophoretic analysis of fluorescently labeled polynucleotide fragments, which comprises:
(a) a capillary containing an electrophoretic separation medium, the capillary having an inlet-end and an outlet-end;
(b) means for introducing the fluorescently labeled polynucleotide fragments into the capillary;
(c) an electrical power supply capable of generating a sufficient voltage across the capillary to cause electrophoresis of the fluorescently labeled polynucleotide fragments;
(d) spectral-array detection means for detecting said fluorescently labeled polynucleotide fragments including the simultaneous detection of multiple fluorescent labels; and
(e) means for introducing and removing electrophoretic separation medium from said capillary, **characterized in that** the detection means (d) includes a laser light source and that the introducing and removing means is effective to apply a positive pressure to a reservoir containing separation medium which is in fluid communication with the outlet-end of the capillary.

2. The apparatus of claim 1 including a plurality of axially aligned capillaries.

3. The apparatus of claim 1 wherein the means for introducing said fluorescently labeled polynucleotide fragments into said capillaries is an electrokinetic injection means.

4. The apparatus of claim 1 wherein said electrophoretic separation medium is replaced by applying positive pressure to a reservoir containing said electrophoretic separation medium which is in communication with a first end of said capillary such that said electrophoretic separation medium being replaced is removed through a second end of said capillary.

5. The apparatus of claim 1 wherein said electrophoretic separation medium is replaced by applying a vacuum to a reservoir which is in communication with a first end of said capillary such that said electrophoretic separation medium being replaced is removed through the first end of said capillary and where the second end of said capillary is in communication with a reservoir containing said electrophoretic separation medium.

6. The apparatus of claim 1 wherein said capillary is rinsed before filling with separation medium.

7. The apparatus of claim 6 wherein said capillary is rinsed with sodium hydroxide.

8. The apparatus of claim 1 wherein the separation medium comprises linear polyacrylamide having an average molecular weight between about 20 kDa and about 100 kDa.

9. The apparatus of claim 1 wherein the separation medium comprises poly(N,N-dimethylacrylamide).

10. The apparatus of claim 1 wherein the separation medium comprises a gel containing a 1:1 (w/w) mixture of PEG-35,000-(C₆F₁₃)₂ copolymer and PEG-35,000-(C₈F₁₇)₂ copolymer.

11. The apparatus of claim 1 wherein the detection means comprises a spectral-array detection means, the output of which is processed so as to effect a virtual filter.

12. The apparatus of claim 11 wherein the wavelengths of said virtual filter are 540, 560, 580, and 610 nm, each 10 nm wide.

13. The apparatus of claim 11 wherein the wavelengths of said virtual filter are 530, 545, 560, 580 nm, each 10 nm wide.

14. The apparatus of claim 1 wherein the optical and electronic detection means include a laser light source.

15. The apparatus of claim 1 having a means for maintaining the capillary at a selected temperature during electrophoresis.

16. The apparatus of claim 15 wherein the temperature control means comprises a thermally controlled plate against which said capillary is forced by a deformable thermally insulating material.

17. A method for electrophoretic analysis of fluorescently labeled polynucleotide fragments, which comprises:
(a) introducing the fluorescently labeled polynucleotide fragments into a capillary containing an electrophoretic separation medium, the capillary having an inlet-end and an outlet-end;
(b) applying a sufficient voltage across the capillary to cause electrophoresis of the fluorescently labeled polynucleotide fragments;
(c) detecting said fluorescently labeled polynucleotide fragments including the simultaneous detection of multiple fluorescent labels, and
(d) introducing fresh electrophoretic separation medium and removing spent electrophoretic separation medium from said capillary, **characterized by** detecting step (c) being carried out by means of laser-induced fluorescence and by introducing and removing step (d) being carried out by applying a positive pressure to a reservoir containing separation medium which is in fluid-communication with the outlet-end of the capillary.

18. The method of claim 17 including a plurality of axially aligned capillaries.

19. The method of claim 17 wherein the means for introducing said fluorescently labeled polynucleotide fragments into said capillaries is an electrokinetic injection means.

20. The method of claim 17 wherein spent separation medium is removed from said capillary by introducing fresh separation medium by positive pressure means into one end of said capillary and removing spent separation medium from the other end.

21. The method of claim 17 wherein spent separation medium is removed from said capillary by introducing fresh separation medium by a vacuum means into one end of said capillary and removing spent separation medium from the other end.

22. The method of claim 17 wherein the capillary is rinsed before filling with fresh separation medium

23. The method of claim 22 wherein the rinsing is effected with sodium hydroxide.

24. The method of claim 17 wherein the separation medium is linear polyacrylamide having an average molecular weight between about 20 kDa and about 100 kDa.

25. The method of claim 17 wherein the separation medium is poly(N,N-dimethylacrylamide).

26. The method of claim 17 wherein the separation medium is a gel containing a 1:1 (w/w) mixture of PEG-35,000-(C₆F₁₃)₂) copolymer and PEG-35,000-(C₈F₁₇)₂) copolymer.

27. The method of claim 17 wherein the detection means includes a CCD array, the output of which is processed so as to effect a virtual filter.

28. The method of claim 27 wherein the wavelengths of said virtual filter are 540, 560, 580, and 610 nm, each 10 nm wide.

29. The method of claim 27 wherein the wavelengths of said virtual filter are 530, 545, 560, 580 nm, each 10 nm wide.

30. The method of claim 17 wherein the optical and electronic detection means include a laser as a light source.

31. The method of claim 17 having a means for maintaining the capillary at a selected temperature during electrophoresis.

32. The method of claim 31 wherein the temperature control means comprises a thermally controlled plate against which said capillary is forced by a deformable thermally insulating material.

## Patentansprüche

1. Vorrichtung für die elektrophoretische Analyse von fluoreszenzmarkierten Polynucleotidfragmenten, die umfasst:
(a) ein Kapillarröhrchen, das ein elektrophoretisches Trennmedium enthält, wobei das Kapillarröhrchen ein Einlassende und ein Auslassende aufweist;
(b) Mittel zum Einführen der fluoreszenzmarkierten Polynucleotidfragmente in das Kapillarröhrchen;
(c) eine elektrische Stromversorgung, die eine ausreichende Spannung über dem Kapillarröhrchen erzeugen kann, um Elektrophorese der fluoreszenzmarkierten Polynucleotidfragmente zu veranlassen;
(d) Spektralanordnung-Detektionsmittel zum Detektieren der fluoreszenzmarkierten Polynucleotidfragmente einschließlich der gleichzeitigen Detektion von mehreren Fluoreszenzmarkierungen; und
(e) Mittel zum Einführen und Entfernen von elektrophoretischem Trennmedium aus dem Kapillarröhrchen, **dadurch gekennzeichnet, dass** das Detektionsmittel (d) eine Laserlichtquelle umfasst und dass das Einführungs- und Entfernungsmittel wirksam ist, um einen positiven Druck auf einen das Trennmedium enthaltenden Behälter auszuüben, welcher in Fluidverbindung mit dem Auslassende des Kapillarröhrchens ist.

2. Vorrichtung nach Anspruch 1, die eine Mehrzahl axial ausgerichteter Kapillarröhrchen umfasst.

3. Vorrichtung nach Anspruch 1, bei der das Mittel zum Einführen der fluoreszenzmarkierten Polynucleotidfragmente in die Kapillarröhrchen ein elektrokinetisches Injektionsmittel ist.

4. Vorrichtung nach Anspruch 1, bei der das elektrophoretische Trennmedium durch Ausüben von positivem Druck auf einen das elektrophoretische Trennmedium enthaltenden Behälter ersetzt wird, welcher mit einem ersten Ende des Kapillarröhrchen ist Verbindung steht, so dass das elektrophoretische Trennmedium, das ersetzt wird, durch ein zweites Ende des Kapillarröhrchens entfernt wird.

5. Vorrichtung nach Anspruch 1, bei der das elektrophoretische Trennmedium durch Anlegen eines Vakuums an einen Behälter ersetzt wird, der in Verbindung mit einem ersten Ende des Kapillarröhrchens steht, so dass das elektrophoretische Trennmedium, das ersetzt wird, durch das erste Ende des Kapillarröhrchens entfernt wird, und bei der das zweite Ende des Kapillarröhrchen in Verbindung mit einem das elektrophoretische Trennmedium enthaltenden Behälter steht.

6. Vorrichtung nach Anspruch 1, bei der das Kapillarröhrchen vor Füllung mit Trennmedium gespült wird.

7. Vorrichtung nach Anspruch 6, bei der das Kapillarröhrchen mit Natriumhydroxid gespült wird.

8. Vorrichtung nach Anspruch 1, bei der das Trennmedium lineares Polyacrylamid mit einem durchschnittlichen Molekulargewicht zwischen etwa 20 kDa und etwa 100 kDa aufweist.

9. Vorrichtung nach Anspruch 1, bei der das Trennmedium Poly(N,N-Dimethylacrylamid) aufweist.

10. Vorrichtung nach Anspruch 1, bei der das Trennmedium ein Gel aufweist, das eine 1:1 (Gew./Gew.) Mischung von PEG-35.000-(C₆F₁₃)₂-Copolymer und PEG-35.000-(C₈F₁₇)₂-Copolymer aufweist.

11. Vorrichtung nach Anspruch 1, bei der das Detektionsmittel ein Spektralanordnung-Detektionsmittel aufweist, dessen Ausgabe so verarbeitet wird, um einen virtuellen Filter zu bewirken.

12. Vorrichtung nach Anspruch 11, bei der die Wellenlängen des virtuellen Filters 540, 560, 580 und 610 nm, jeweils mit einer Breite von 10 nm sind.

13. Vorrichtung nach Anspruch 11, bei der die Wellenlängen des virtuellen Filters 530, 545, 560, 580 nm, jeweils mit einer Breite von 10 nm sind.

14. Vorrichtung nach Anspruch 1, bei der die optischen und elektronischen Detektionsmittel eine Laserlichtquelle umfassen.

15. Vorrichtung nach Anspruch 1, die ein Mittel zum Halten des Kapillarröhrchens auf einer ausgewählten Temperatur während Elektrophorese umfasst.

16. Vorrichtung nach Anspruch 15, bei der das Temperatursteuermittel eine wärmegesteuerte Platte aufweist, gegen die das Kapillarröhrchen durch ein verformbares wärmeisolierendes Material gedrückt wird.

17. Verfahren für elektrophoretische Analyse von fluoreszenzmarkierten Polynucleotidfragmenten, das umfasst:
(a) die fluoreszenzmarkierten Polynucleotidfragmente in ein Kapillarröhrchen einzuführen, das ein elektrophoretisches Trennmedium enthält, wobei das Kapillarröhrchen ein Einlassende und ein Auslassende aufweist;
(b) eine ausreichende Spannung über dem Kapillarröhrchen anzulegen, um Elektrophorese der fluoreszenzmarkierten Polynucleotidfragmente zu veranlassen;
(c) die fluoreszenzmarkierten Polynucleotidfragmente zu detektieren, einschließlich der gleichzeitigen Detektion mehrerer Fluoreszenzmarkierungen, und
(d) frisches elektrophoretisches Trennmedium einzuführen und verbrauchtes elektrophoretisches Trennmedium aus dem Kapillarröhrchen zu entfernen, **dadurch gekennzeichnet, dass** der Detektionsschritt (c) mittels laserinduzierter Fluoreszenz und durch Einführung und Entfernen durchgeführt wird, wobei Schritt (d) durch Anlegen eines positiven Drucks an einen Trennmedium enthaltenden Behälter durchgeführt wird, welcher in Fluidverbindung mit dem Auslassende des Kapillarröhrchens steht.

18. Verfahren nach Anspruch 17, das eine Mehrzahl axial ausgerichteter Kapillarröhrchen umfasst.

19. Verfahren nach Anspruch 17, bei dem das Mittel zum Einführen der fluoreszenzmarkierten Polynucleotidfragmente in die Kapillarröhrchen ein elektrokinetisches Injektionsmittel darstellt.

20. Verfahren nach Anspruch 17, bei dem verbrauchtes Trennmedium aus dem Kapillarröhrchen durch Einführen von frischem Trennmedium durch positive Druckmittel in ein Ende des Kapillarröhrchens und Entfernen von verbrauchtem Trennmedium aus dem anderen Ende entfernt wird.

21. Verfahren nach Anspruch 17, bei dem verbrauchtes Trennmedium aus dem Kapillarröhrchen durch Einführen von frischem Trennmedium durch ein Vakuummittel in ein Ende des Kapillarröhrchens und Entfernen des verbrauchten Trennmediums aus dem anderen Ende entfernt wird.

22. Verfahren nach Anspruch 17, bei dem das Kapillarröhrchen gespült wird, bevor es mit frischem Trennmedium gefüllt wird.

23. Verfahren nach Anspruch 22, bei dem das Spülen mit Natriumhydroxid bewirkt wird.

24. Verfahren nach Anspruch 17, bei dem das Trennmedium lineares Polyacrylamid mit einem durchschnittlichen Molekulargewicht zwischen etwa 20 kDa und etwa 100 kDa darstellt.

25. Verfahren nach Anspruch 17, bei dem das Trennmedium Poly(N,N-Dimethylacrylamid) darstellt.

26. Verfahren nach Anspruch 17, bei dem das Trennmedium ein Gel darstellt, das eine 1:1 (Gew./Gew.) Mischung von PEG-35.000-(C₆F₁₃)₂-Copolymer und PEG-35.000-(C₈F₁₇)₂-Copolymer aufweist.

27. Verfahren nach Anspruch 17, bei dem das Detektionsmittel eine CCD-Anordnung umfasst, deren Ausgabe so verarbeitet wird, um einen virtuellen Filter zu bewirken.

28. Verfahren nach Anspruch 27, bei dem die Wellenlängen des virtuellen Filters 540, 560, 580 und 610 nm, jeweils mit einer Breite von 10 nm sind.

29. Verfahren nach Anspruch 27, bei dem die Wellenlängen des virtuellen Filters 530, 545, 560, 580 nm, jeweils mit einer Breite von 10 nm sind.

30. Verfahren nach Anspruch 17, bei dem die optischen und elektronischen Detektionsmittel einen Laser als Lichtquelle umfassen.

31. Verfahren nach Anspruch 17, das ein Mittel zum Halten des Kapillarröhrchens auf einer ausgewählten Temperatur während Elektrophorese umfasst.

32. Vorrichtung nach Anspruch 31, bei dem das Temperatursteuermittel eine wärmegesteuerte Platte aufweist, gegen die das Kapillarröhrchen durch ein verformbares wärmeisolierendes Material gedrückt wird.

## Revendications

1. Dispositif pour l'analyse électrophorétique de fragments polynucléotidiques à marqueur fluorescent, qui comprend :
(a) un capillaire contenant un milieu de séparation électrophorétique, le capillaire ayant une extrémité d'entrée et une extrémité de sortie :
(b) des moyens pour introduire les fragments polynucléotidiques à marqueur fluorescent dans le capillaire ;
(c) une alimentation électrique capable de générer une tension suffisante à travers le capillaire pour provoquer l'électrophorèse des fragments polynucléotidiques à marqueur fluorescent ;
(d) des moyens de détection du domaine spectrale pour détecter lesdits fragments polynucléotidiques à marqueur fluorescent, comprenant la détection simultanée de marqueurs fluorescents multiples ; et
(e) des moyens d'introduction du milieu de séparation électrophorétique dans ledit capillaire et de retrait de ce milieu dudit capillaire,
**caractérisé en ce que** les moyens de détection (d) comprennent une source de lumière laser et **en ce que** les moyens d'introduction et de retrait permettent d'appliquer une pression positive à un réservoir contenant du milieu de séparation qui est en communication de fluide avec l'extrémité de sortie du capillaire.

2. Dispositif selon la revendication 1, comprenant une pluralité de capillaires alignés axialement.

3. Dispositif selon la revendication 1, dans lequel les moyens pour introduire lesdits fragments polynucléotidiques à marqueur fluorescent dans lesdits capillaires sont des moyens d'injection électrocinétique.

4. Dispositif selon la revendication 1, dans lequel ledit milieu de séparation électrophorétique est remplacé par application d'une pression positive à un réservoir contenant ledit milieu de séparation électrophorétique qui est en communication avec une première extrémité dudit capillaire de façon que ledit milieu de séparation électrophorétique qui est remplacé soit retiré par une deuxième extrémité dudit capillaire.

5. Dispositif selon la revendication 1, dans lequel ledit milieu de séparation électrophorétique est remplacé par application d'un vide à un réservoir qui est en communication avec une première extrémité dudit capillaire de façon que ledit milieu de séparation électrophorétique qui est remplacé soit retiré par la première extrémité dudit capillaire, la deuxième extrémité dudit capillaire étant en communication avec un réservoir contenant ledit milieu de séparation électrophorétique.

6. Dispositif selon la revendication 1, dans lequel ledit capillaire est rincé avant remplissage avec le milieu de séparation.

7. Dispositif selon la revendication 6, dans lequel ledit capillaire est rincé avec de l'hydroxyde de sodium.

8. Dispositif selon la revendication 1, dans lequel le milieu de séparation comprend un polyacrylamide linéaire ayant une masse moléculaire moyenne comprise entre environ 20 kDa et environ 100 kDa.

9. Dispositif selon la revendication 1, dans lequel le milieu de séparation comprend du poly(N,N-diméthylacrylamide).

10. Dispositif selon la revendication 1, dans lequel le milieu de séparation comprend un gel contenant un mélange 1/1 (p/p) de copolymère PEG-35 000- (C₆F₁₃)₂ et de copolymêre PEG-35 000-(C₈F₁₇)₂.

11. Dispositif selon la revendication 1, dans lequel les moyens de détection comprennent des moyens de détection de domaine spectrale, dont la sortie est traitée de façon à réaliser un filtre virtuel.

12. Dispositif selon la revendication 11, dans lequel les longueurs d'onde dudit filtre virtuel sont de 540, 560, 580 et 610 nm, chacune avec une largeur de 10 nm.

13. Dispositif selon la revendication 11, dans lequel les longueurs d'onde dudit filtre virtuel sont de 530, 545, 560, 580 nm, chacune avec une largeur de 10 nm.

14. Dispositif selon la revendication 1, dans lequel les moyens de détection optiques et électroniques comprennent une source de lumière laser.

15. Dispositif selon la revendication 1, ayant des moyens pour maintenir le capillaire à une température sélectionnée durant l'électrophorèse.

16. Dispositif selon la revendication 15, dans lequel les moyens de contôle de température comprennent une plaque thermiquement contrôlée contre laquelle ledit capillaire est forcé par un matériau isolant thermiquement déformable.

17. Procédé pour l'analyse électrophorétique de fragments polynucléotidiques à marqueur fluorescent, qui comprend :
(a) l'introduction des fragments polynucléotidiques à marqueur fluorescent dans un capillaire contenant un milieu de séparation électrophorétique, le capillaire ayant une extrémité d'entrée et une extrémité de sortie ;
(b) l'application d'une tension suffisante à travers le capillaire pour provoquer une électrophorèse des fragments polynucléotidiques à marqueur fluorescent ;
(c) la détection desdits fragments polynucléotidiques à marqueur fluorescent, comprenant la détection simultanée de marqueurs fluorescents multiples, et
(d) l'introduction de milieu de séparation électrophorétique frais dans le capillaire et le retrait du milieu de séparation électrophorétique usé dudit capillaire,
**caractérisé en ce que** l'étape de détection (c) est mise en oeuvre au moyen d'une fluorescence induite par un laser et l'étape d'introduction et de retrait (d) est mise en oeuvre par application d'une pression positive à un réservoir contenant du milieu de séparation qui est en communication de fluide avec l'extrémité de sortie du capillaire.

18. Procédé selon la revendication 17, comprenant une pluralité de capillaires alignés axialement.

19. Procédé selon la revendication 17, dans lequel les moyens pour introduire lesdits fragments polynucléotidiques à marqueur fluorescent dans lesdits capillaires sont des moyens d'injection électrocinétique.

20. Procédé selon la revendication 17, dans lequel le milieu de séparation usé est retiré dudit capillaire par introduction de milieu de séparation frais par des moyens créant une pression positive dans une extrémité dudit capillaire et retrait du milieu de séparation par l'autre extrémité.

21. Procédé selon la revendication 17, dans lequel le milieu de séparation usé est retiré dudit capillaire par introduction de milieu de séparation frais par des moyens générant de vide dans une extrémité dudit capillaire et retrait du milieu de séparation usé par l'autre extrémité.

22. Procédé selon la revendication 17, dans lequel le capillaire est rincé avant remplissage avec du milieu de séparation frais.

23. Procédé selon la revendication 22, dans lequel le rinçage est effectué avec de l'hydroxyde de sodium.

24. Procédé selon la revendication 17, dans lequel le milieu de séparation est un polyacrylamide linéaire ayant une masse moléculaire moyenne comprise entre environ 20 kDa et environ 100 kDa.

25. Procédé selon la revendication 17, dans lequel le milieu de séparation comprend du poly(N,N-diméthylacrylamide).

26. Procédé selon la revendication 17, dans lequel le milieu de séparation est un gel contenant un mélange 1/1 (p/p) de copolymère PEG-35 000-(C₆F₁₃)₂ et de copolymère PEG-35 000-(C₈F₁₇)₂.

27. Procédé selon la revendication 17, dans lequel les moyens de détection comprennent une matrice de dispositifs à couplage de charges, dont la sortie est traitée de façon à réaliser un filtre virtuel.

28. Procédé selon la revendication 27, dans lequel les longueurs d'onde dudit filtre virtuel sont de 540, 560, 580 et 610 nm, chacune d'une largeur de 10 nm.

29. Procédé selon la revendication 27, dans lequel les longueurs d'onde dudit filtre virtuel sont de 530, 545, 560, 580 nm, chacune d'une largeur de 10 nm.

30. Procédé selon la revendication 17, dans lequel les moyens de détection optiques et électroniques comprennent une source de lumière laser.

31. Procédé selon la revendication 17, ayant des moyens pour maintenir le capillaire à une température sélectionnée durant l'électrophorèse.

32. Procédé selon la revendication 31, dans lequel les moyens de contrôle de température comprennent une plaque thermiquement contrôlée contre laquelle ledit capillaire est forcé par un matériau isolant thermiquement déformable.
